# EUROPÄISCHE PATENTSCHRIFT

(11) **EP 3 032 317 B1**
(45) Veröffentlichungstag und Bekanntmachung des Hinweises auf die Patenterteilung: **16.11.2022**
(21) Anmeldenummer: 15198621.3
(22) Anmeldetag: 09.12.2015
(51) Int. Cl.: G02B 27/01, G02B 27/62

(54) **ANZEIGEVORRICHTUNG FÜR EIN KRAFTFAHRZEUG MIT LAGESENSOR, KRAFTFAHRZEUG SOWIE JUSTAGEVERFAHREN**
DISPLAY DEVICE FOR A MOTOR VEHICLE WITH POSITION SENSOR, MOTOR VEHICLE AND ADJUSTMENT METHOD
DISPOSITIF D'AFFICHAGE POUR UN VEHICULE AUTOMOBILE COMPRENANT UN CAPTEUR DE POSITION, VEHICULE AUTOMOBILE ET PROCEDE D'AJUSTEMENT

(30) Priorität: 09.12.2014 DE 102014118191
(43) Veröffentlichungstag der Anmeldung: 15.06.2016
(73) Patentinhaber: Valeo Comfort and Driving Assistance, 94046 Créteil Cedex (FR)
(72) Erfinder: Simonis, Karl, 74321 Bietigheim-Bissingen (DE); Schoch, Lars, 74321 Bietigheim-Bissingen (DE); Kuntze, Daniel, 74321 Bietigheim-Bissingen (DE)

(56) Entgegenhaltungen:
- WO-A1-2009/095246
- DE-A1- 2 633 067
- DE-A1-102012 010 120
- US-A- 4 775 218
- US-A- 5 343 288
- US-A- 5 729 366

## Beschreibung

Die vorliegende Erfindung betrifft eine Anzeigevorrichtung für ein Kraftfahrzeug, welche als Kopf-oben-Anzeigevorrichtung ausgebildet ist und welche als Komponenten eine Bilderzeugungseinrichtung und eine Optikeinrichtung umfasst, wobei die Bilderzeugungseinrichtung zum Abstrahlen von Licht ausgelegt ist und die Optikeinrichtung dazu ausgelegt ist, zum Bereitstellen einer virtuellen Anzeige das von der Bilderzeugungseinrichtung abgestrahlte Licht auf ein Anzeigeelement, welches eine semitransparente Spiegelfläche aufweist, zu projizieren. Die Erfindung betrifft außerdem ein Kraftfahrzeug mit einer solchen Anzeigevorrichtung. Schließlich betrifft die vorliegende Erfindung ein Verfahren zum Justieren einer Anzeigevorrichtung für ein Kraftfahrzeug.

Das Interesse richtet sich vorliegend auf Anzeigevorrichtungen für Kraftfahrzeuge, die insbesondere als Head-up Displays beziehungsweise als Kopf-oben-Anzeigevorrichtungen ausgebildet sind. Eine derartige Anzeigevorrichtung umfasst üblicherweise eine Bilderzeugungseinrichtung, mit der Licht abgestrahlt werden kann. Ferner umfasst die Anzeigevorrichtung eine Optikeinrichtung, welche beispielsweise einen oder mehrere Spiegel umfassen kann. Mit der Optikeinrichtung kann das von der Bilderzeugungseinrichtung abgestrahlte Licht auf ein Anzeigeelement projiziert werden. Das Anzeigeelement weist eine semitransparente Spiegelfläche auf. Diese semitransparente Spiegelfläche kann beispielsweise durch einen Bereich der Windschutzscheibe des Kraftfahrzeugs bereitgestellt werden. Ferner sind Anzeigevorrichtungen bekannt, die einen sogenannten Combinerspiegel beziehungsweise Kominberspiegel aufweisen, der die semitransparente Spiegelfläche umfasst. Durch eine Überlagerung der auf den Spiegel projizierten Information, welche von diesem reflektiert wird, mit einer durch den Spiegel hindurch scheinenden Information aus einer hinter dem Spiegel gelegenen Umgebung kann somit ein virtuelles Bild beziehungsweise eine virtuelle Anzeige bereitgestellt werden.

Derartige Anzeigevorrichtungen werden in und/oder an dem Kraftfahrzeug montiert. Aufgrund von Einbautoleranzen weicht die Position einer sogenannten Eyebox der Anzeigevorrichtung von der idealen Position ab. Die Eyebox beschreibt einen Bereich in dem Innenraum des Kraftfahrzeugs, in dem sich die Augen des Betrachters befinden müssen, um das virtuelle Bild beziehungsweise die virtuelle Anzeige der Anzeigevorrichtung sehen zu können. Um diese Einbautoleranzen auszugleichen, werden üblicherweise entsprechende Verstellvorrichtungen verwendet, mit denen die Anzeigevorrichtung bezüglich ihrer Lage und/oder Neigung verstellt werden kann. Hierbei wird insbesondere eine vertikale Mittelposition der Eyebox eingestellt.

Aus dem Stand der Technik ist es bekannt, zur Einstellung von solchen Kopf-oben-Anzeigevorrichtungen bei der Erstmontage einen Messaufbau mit einer Kamera zu verwenden, die über eine Leere auf einem Fahrersitz des Kraftfahrzeugs platziert wird. Die Kamera misst dabei die Position des virtuellen Bilds bzw. der virtuellen Anzeige. Anhand der gemessenen Position des virtuellen Bilds kann eine Referenzlage und/oder eine Referenzneigung für die Anzeigevorrichtung bestimmt werden. Die Einstellung der Lage beziehungsweise der Neigung der Anzeigevorrichtung erfolgt dann über die Verstelleinrichtung innerhalb der Anzeigevorrichtung. Eine derartige Einstellung beziehungsweise Justage der Anzeigevorrichtung ist sehr präzise aber verhältnismäßig zeitaufwendig. Dies kann beispielsweise zur Folge haben, dass entsprechende Taktzeiten bei der Produktion nicht eingehalten werden können. Des Weiteren ist eine Nachjustage nach der Produktion des Kraftfahrzeugs oder bei einem Austausch der Anzeigevorrichtung nicht ohne Weiteres möglich.

In diesem Zusammenhang beschreibt die US 5,343,288 A ein System zur Bewertung einer Öffnung einer Windschutzscheibe eines Head-up Displays. Das System umfasst eine Einrichtung zum Montieren der Windschutzscheibe in einer vorbestimmten Position. Ferner umfasst das System eine Platte, die eine Reihe von genau beabstandeten parallelen Schlitzen aufweist. Das Licht, welches durch die Schlitze hindurch tritt, kann mit einem Zeilenkamera-Array erfasst werden und mit denen, die mit einer Referenzplatte bestimmt wurden, verglichen werden.

Ein System zur sensorgesteuerten Lageveränderung einer Anzeigevorrichtung für ein Kraftfahrzeug ist aus DE 26 33 067 A1 bekannt.

Die WO 2009/095246 A1 offenbart eine Anzeigevorrichtung für ein Kraftfahrzeug, wobei die Vibration von Komponenten der Anzeigevorrichtung mittels einer Kamera erfassbar sind. Die Kamera befindet sich im Kopfbereich des Fahres. Mittels eines Aktuators können die Vibrationen kompensiert werden.

Es ist Aufgabe der vorliegenden Erfindung, eine Lösung aufzuzeigen, wie eine Anzeigevorrichtung, insbesondere eine Kopf-oben-Anzeigevorrichtung, der eingangs genannten Art einfacher montiert und betrieben werden kann.

Diese Aufgabe wird erfindungsgemäß durch eine Anzeigevorrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Anzeigevorrichtung für ein Kraftfahrzeug, welche als Kopf-oben-Anzeigevorrichtung ausgebildet ist und welche als Komponenten eine Bilderzeugungseinrichtung und eine Optikeinrichtung umfasst, wobei die Bilderzeugungseinrichtung zum Abstrahlen von Licht ausgelegt ist und die Optikeinrichtung dazu ausgelegt ist, zum Bereitstellen einer virtuellen Anzeige das von der Bilderzeugungseinrichtung abgestrahlte Licht auf ein Anzeigeelement, welches eine semitransparente Spiegelfläche aufweist, zu projizieren. Darüber hinaus umfasst die Anzeigevorrichtung einen Lagesensor zum Bestimmen einer Lage und/oder einer Neigung zumindest einer der Komponenten der Anzeigevorrichtung.

Die Anzeigevorrichtung ist als Kopf-oben-Anzeigevorrichtung beziehungsweise als sogenanntes Head-up Display ausgebildet. Die Anzeigevorrichtung weist als Komponenten die Bilderzeugungseinrichtung und die Optikeinrichtung auf. Die Anzeigevorrichtung kann auch weitere Komponenten aufweisen. Mit der Bilderzeugungseinrichtung kann Licht abgestrahlt werden kann. Insbesondere kann mit der Bilderzeugungseinrichtung ein Bild bereitgestellt beziehungsweise abgestrahlt werden. Die Bilderzeugungseinrichtung kann beispielsweise einen entsprechenden Bildschirm beziehungsweise ein Display aufweisen. Ferner umfasst die Anzeigevorrichtung eine Optikeinrichtung, die beispielsweise einen oder mehrere Spiegel und/oder einen oder mehrere Linsen aufweisen kann. Mittels der Optikeinrichtung kann das von der Bilderzeugungseinrichtung abgestrahlte Licht auf ein Anzeigeelement projiziert werden. Das Anzeigeelement weist eine semitransparente Spiegelfläche auf. Somit kann das auf das Anzeigeelement projizierte Licht, welches von diesem reflektiert wird, mit dem Licht, das von dem hinter dem Anzeigeelement gelegenen Umgebungsbereich durch das Anzeigeelement hindurch scheint, überlagert werden. Somit kann beispielsweise für einen Betrachter, insbesondere den Fahrer des Kraftfahrzeugs, eine virtuelle Anzeige bereitgestellt werden, die sich durch die Überlagerung der Umgebung des Kraftfahrzeugs und der von dem Anzeigeelement reflektierten Anzeige ergibt.

Vorliegend weist die Anzeigevorrichtung zudem einen Lagersensor auf. Mit dem Lagesensor kann eine Lage zumindest einer Komponente der Anzeigevorrichtung bestimmt werden. Mit dem Lagesensor kann also die Lage und/oder die Neigung von der Bilderzeugungseinrichtung und/oder der Optikeinrichtung bestimmt werden.

Hierfür wird die relative Lage zumindest einer Komponente der Anzeigevorrichtung zu einem Referenzelement des Kraftfahrzeugs bestimmt. Der Lagesensor kann beispielsweise dazu ausgelegt sein, einen Abstand zwischen der Anzeigevorrichtung und dem Referenzelement zu bestimmen. Alternativ oder zusätzlich kann mit dem Lagesensor eine Neigung der Anzeigevorrichtung oder einer Komponente der Anzeigevorrichtung bestimmt werden. Der Lagesensor kann beispielsweise als Neigungssensor ausgebildet sein, mit dem eine absolute Neigung beziehungsweise eine absolute Winkellage der Anzeigevorrichtung erfasst werden kann. Der Lagesensor kann nach Art eines Lagesensors beziehungsweise Neigungssensors ausgebildet sein, welcher in Smartphones oder Tablets verwendet wird. Der Lagesensor kann zumindest einen Beschleunigungssensor aufweisen, der ein Feder-Masse-System umfasst. Der Lagesensor kann dazu ausgelegt sein, Beschleunigungen in zumindest zwei unterschiedliche Raumrichtungen, insbesondere in drei Raumrichtungen, zu bestimmen. Mit dem Lagesensor kann dann anhand der Gravitation beziehungsweise Erdbeschleunigung, die auf den Lagesensor wirkt, die Neigung bestimmt werden. Der Lagesensor ist erfindungsgemäß als Gyroskop ausgebildet . Insbesondere kann der Lagesensor als mikro-elektro-mechanisches System ausgebildet sein.

Mit Hilfe des Lagesensors kann die aktuelle Lage und/oder die aktuelle Neigung der Anzeigevorrichtung oder zumindest einer Komponente der Anzeigevorrichtung bestimmt werden. Dies ermöglicht es beispielsweise, die aktuelle Lage und/oder die aktuelle Neigung der Anzeigevorrichtung mit einer Referenzlage und/oder einer Referenzneigung zu vergleichen. Somit kann beispielsweise auf einfache Weise bestimmt werden, ob die Lage und/oder die Neigung der Anzeigevorrichtung korrekt ist. Somit kann beispielsweise darauf verzichtet werden, die korrekte Lage beziehungsweise Neigung der Anzeigevorrichtung anhand der Position der Eyebox zu bestimmen. Die Eyebox beschreibt insbesondere den Bereich im Innenraum des Kraftfahrzeugs, in welchem sich die Augen des Betrachters befinden müssen, um das virtuelle Bild der Anzeigevorrichtung sehen zu können. Damit kann die korrekte Justage der Anzeigevorrichtung innerhalb kurzer Zeit bestimmt werden.

Erfindungsgemäß weist die Anzeigevorrichtung eine Steuereinrichtung auf, welche dazu ausgelegt ist, eine Abweichung der bestimmten Lage und/oder Neigung der zumindest einer der Komponenten der Anzeigevorrichtung zu einer vorbestimmten Referenzlage und/oder Referenzneigung zu bestimmen. Die Referenzlage und/oder die Referenzneigung für die Anzeigevorrichtung beziehungsweise deren Komponenten kann beispielsweise in einer Speichereinheit der Steuereinrichtung hinterlegt sein. Die Steuereinrichtung ist insbesondere mit dem Lagesensor zur Datenübertragung verbunden. Somit können die mit dem Lagesensor bestimmten Messsignale an die Steuereinrichtung übertragen werden. Auf diese Weise kann die Steuereinrichtung die aktuelle Lage und/oder die aktuelle Neigung der Anzeigevorrichtung oder einer Komponente der Anzeigevorrichtung bestimmen und mit der Referenzlage und/oder der Referenzneigung vergleichen. Somit kann auf einfache Weise bestimmt werden, ob die Anzeigevorrichtung korrekt justiert ist.

Erfindungsgemäß weist die Anzeigevorrichtung eine Verstelleinrichtung zum Verstellen der Lage und/oder der Neigung der zumindest einen der Komponenten der Anzeigevorrichtung in Abhängigkeit von der mit der Steuereinrichtung bestimmten Abweichung auf. Die Verstelleinrichtung kann beispielsweise einen entsprechende Aktor oder einen Stellmotor umfassen, mit welchem die Anzeigevorrichtung oder eine Komponente der Anzeigevorrichtung bezüglich der Lage und/oder der Neigung verstellt werden können. Falls mit der Steuereinrichtung eine Abweichung der aktuellen Lage beziehungsweise Neigung der Anzeigevorrichtung zu der Referenzlage beziehungsweise Referenzneigung ermittelt wird, kann mit der Steuereinrichtung ein entsprechendes Steuersignal erzeugt werden und an die Verstelleinrichtung übertragen werden. Infolge des Stellsignals kann die Lage und/oder Neigung der Anzeigevorrichtung so verstellt werden, dass sie mit der Referenzlage beziehungsweise der Referenzneigung übereinstimmt. Somit kann eine schnelle Justage der Anzeigevorrichtung ermöglicht werden.

In einer Ausführungsform ist die Optikeinrichtung dazu ausgelegt, das von der Bilderzeugungseinrichtung abgestrahlte Licht zum Bereitstellen der virtuellen Anzeige auf zumindest einen Teil einer Windschutzscheibe des Kraftfahrzeugs als das Anzeigeelement zu projizieren. In diesem Fall ist das Anzeigeelement durch zumindest einen Teil der Windschutzscheibe des Kraftfahrzeugs gebildet. Dieser Teil der Windschutzscheibe ist insbesondere als semitransparente Spiegelfläche ausgebildet. Bei diesem Ausführungsbeispiel kann die Optikeinrichtung beispielsweise zwei Spiegel aufweisen. Der Lagesensor kann beispielsweise dazu ausgelegt sein, die Lage und/oder Neigung eines der Spiegel zu bestimmen. Ferner kann die Verstelleinrichtung dazu ausgelegt sein, die Lage und/oder Neigung eines der Spiegel der Anzeigevorrichtung zu verstellen.

In einer weiteren Ausführungsform umfasst die Anzeigevorrichtung als Komponente das Anzeigeelement, welches als Combinerspiegel ausgebildet ist, und die Optikeinrichtung ist dazu ausgelegt, das von der Bilderzeugungseinrichtung abgestrahlte Licht zum Bereitstellen der virtuellen Anzeige auf den Combinerspiegel zu projizieren. Bei diesem Ausführungsbeispiel umfasst die Anzeigevorrichtung das Anzeigeelement, welches als Combinerspiegel ausgebildet ist. Der Combinerspiegel ist hier also eine Komponente der Anzeigevorrichtung. Der Combinerspiegel kann auch als Combiner bezeichnet werden. Der Combinerspiegel umfasst insbesondere eine semitransparente Spiegelfläche. Hierbei kann die Anzeigevorrichtung zudem eine Stelleinrichtung umfassen, mittels welcher der Combinerspiegel von einer Verstaustellung in eine Gebrauchsstellung und umgekehrt bewegt werden kann. Bei diesem Ausführungsbeispiel kann der Lagesensor insbesondere dazu ausgelegt sein, die Lage und/oder die Neigung des Combinerspiegels zu erfassen. Ferner kann die Verstelleinrichtung dazu ausgelegt sein, die Lage und/oder Neigung des Combinerspiegels zu verstellen.

Ein erfindungsgemäßes Kraftfahrzeug umfasst eine erfindungsgemäße Anzeigevorrichtung. Das Kraftfahrzeug ist insbesondere als Personenkraftwagen ausgebildet. Die Anzeigevorrichtung ist insbesondere derart in dem Kraftfahrzeug angeordnet, dass für einen Fahrer des Kraftfahrzeugs das virtuelle Bild beziehungsweise die virtuelle Anzeige bereitgestellt werden kann.

In einer Ausführungsform umfasst das Kraftfahrzeug einen Fahrzeugneigungssensor zum Bestimmen einer Neigung des Kraftfahrzeugs und die Steuereinrichtung der Anzeigevorrichtung ist dazu ausgelegt, anhand der bestimmten Neigung des Kraftfahrzeugs eine Referenzneigung vorzubestimmen. Insbesondere kann der Fahrzeugneigungssensor dazu ausgelegt sein, eine Neigung des Kraftfahrzeugs um die Fahrzeugquerachse zu erfassen. Der Neigungssensor kann auch dazu ausgelegt sein, eine Neigung des Kraftfahrzeugs um die Fahrzeuglängsachse zu erfassen. Somit kann die aktuelle Neigung des Kraftfahrzeugs und eine Neigung des Kraftfahrzeugs bezüglich einer Referenzfläche, beispielsweise der Horizontalen, bestimmt werden. Anhand der aktuellen Neigung des Kraftfahrzeugs kann eine Abweichung von dieser Referenzfläche bestimmt werden und bei dem Bestimmen der aktuellen Neigung der Anzeigevorrichtung berücksichtigt werden. Somit kann anhand der Neigung des Kraftfahrzeugs, die mit dem Fahrzeugneigungssensor bestimmt wird, die Referenzneigung für die Anzeigevorrichtung bestimmt werden.

Ein erfindungsgemäßes Verfahren dient zur Justage beziehungsweise zum Justieren einer Anzeigevorrichtung eines Kraftfahrzeugs. Hierbei wird die Anzeigevorrichtung in und/oder an dem Kraftfahrzeug angeordnet. Die Anzeigevorrichtung ist als Kopf-oben-Anzeigevorrichtung ausgebildet und weist als Komponenten eine Bilderzeugungseinrichtung und eine Optikeinrichtung auf, wobei mittels der Bilderzeugungseinrichtung Licht abgestrahlt wird, und mittels der Optikeinrichtung zum Bereitstellen einer virtuellen Anzeige das von der Bilderzeugungseinrichtung abgestrahlte Licht auf ein Anzeigeelement, welches eine semitransparente Spiegelfläche aufweist, projiziert wird. Ferner wird eine Lage und/oder eine Neigung zumindest einer der Komponenten der Anzeigevorrichtung mittels eines Lagesensors der Anzeigevorrichtung bestimmt.

In einer Ausführungsform wird eine Referenzlage und/oder eine Referenzneigung bestimmt und eine Abweichung der Lage und/oder der Neigung der zumindest einen der Komponenten der Anzeigevorrichtung zu der Referenzlage und/oder der Referenzneigung wird mittels einer Steuereinrichtung bestimmt. Weiterhin ist es vorteilhaft, wenn die Lage und/oder die Neigung der Anzeigevorrichtung in Abhängigkeit von der bestimmten Abweichung mittels einer Verstelleinrichtung verstellt wird.

Weiterhin ist es vorteilhaft, wenn die Abweichung zu vorbestimmten Zeitpunkten bestimmt wird. Beispielsweise kann die Abweichung der aktuellen Lage und/oder Neigung der Anzeigevorrichtung zu der Referenzlage und/oder Referenzneigung bei einer Erstmontage der Anzeigevorrichtung an und/oder in dem Kraftfahrzeug bestimmt werden. Somit kann beispielsweise eine Vor-Justage der Anzeigevorrichtung ermöglicht werden. Alternativ oder zusätzlich kann die Abweichung nach der Produktion des Kraftfahrzeugs ermittelt werden. Somit kann eine entsprechende Nach-Justage der Anzeigevorrichtung ermöglicht werden. Es ist auch denkbar, dass die Abweichung zu mehreren aufeinanderfolgenden Zeitpunkten bestimmt wird. Somit kann die Kalibrierung der Anzeigevorrichtung zyklisch im Fahrbetrieb ermöglicht werden.

In einer weiteren Ausführungsform kann das Kraftfahrzeug zum Bestimmen der Referenzneigung auf einer Referenzfläche positioniert werden. Eine derartige Referenzfläche kann beispielsweise eine bekannte Neigung aufweisen. Beispielsweise kann die Referenzfläche horizontal ausgerichtet sein. Somit kann die aktuelle Neigung des Kraftfahrzeugs vorgegeben werden und somit als Referenzneigung bereitgestellt werden. Alternativ oder zusätzlich kann eine Neigung des Kraftfahrzeugs mittels eines Fahrzeugneigungssensors bestimmt werden und die Referenzneigung kann anhand der Neigung des Kraftfahrzeugs bestimmt werden. Wenn die Neigung des Kraftfahrzeugs nur anhand des Fahrzeugneigungssensors bestimmt wird, ist es beispielsweise nicht nötig, das Kraftfahrzeug auf einer Referenzfläche zu positionieren.

Weiterhin ist es vorteilhaft, wenn mittels einer Kamera eine Position der mittels der Anzeigevorrichtung bereitgestellten virtuellen Anzeige bestimmt wird und die Referenzlage und/oder die Referenzneigung anhand der Lage des virtuellen Bilds bestimmt wird. So kann beispielsweise ein aus dem Stand der Technik bekannter Messaufbau verwendet werden, bei dem eine Kamera an einem Fahrersitz des Kraftfahrzeugs angeordnet wird. Somit kann die Position der Eyebox der Anzeigevorrichtung, das heißt des Bereichs, in welchem sich die Augen des Fahrers befinden müssen, bestimmt werden. Beispielsweise kann eine vertikale Mittelposition der Eyebox bestimmt werden. Anhand der bestimmten Mittelposition der Eyebox kann die Referenzlage und/oder die Referenzneigung für die Anzeigevorrichtung bestimmt werden.

In einer weiteren Ausführungsform wird ein Objekt in einem Umgebungsbereich des Kraftfahrzeugs erfasst, eine relative Lage der virtuellen Anzeige zu dem erfassten Objekt wird bestimmt und die Referenzlage und/oder die Referenzneigung wird anhand der relativen Lage bestimmt. Mit anderen Worten kann die Position des virtuellen Bilds beziehungsweise der virtuellen Anzeige fortlaufend relativ zu Objekten in der Umgebung des Kraftfahrzeugs ermittelt werden. Dies eignet sich insbesondere für Anwendungen, bei denen das virtuelle Bild beziehungsweise die virtuelle Anzeige mit einem realen Objekt in dem Umgebungsbereich des Kraftfahrzeugs überlagert werden soll. Somit können beispielsweise Augmented-Reality-Anwendungen bereitgestellt werden.

Die mit Bezug auf die erfindungsgemäße Anzeigevorrichtung vorgestellten bevorzugten Ausführungsformen und deren Vorteile gelten entsprechend für das erfindungsgemäße Kraftfahrzeug sowie für das erfindungsgemäße Verfahren und umgekehrt.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine ausschnittsweise Darstellung eines Kraftfahrzeugs mit einer Anzeigevorrichtung gemäß einer ersten Ausführungsform der vorliegenden Erfindung;
- Fig. 2: das Kraftfahrzeug mit einer Anzeigevorrichtung gemäß einer zweiten Ausführungsform der vorliegenden Erfindung; und
- Fig. 3: eine schematische Darstellung, welche eine Justage der Anzeigevorrichtung gemäß Fig. 1 verdeutlicht.

In den Figuren werden gleiche und funktionsgleiche Elemente mit den gleichen Bezugszeichen versehen.

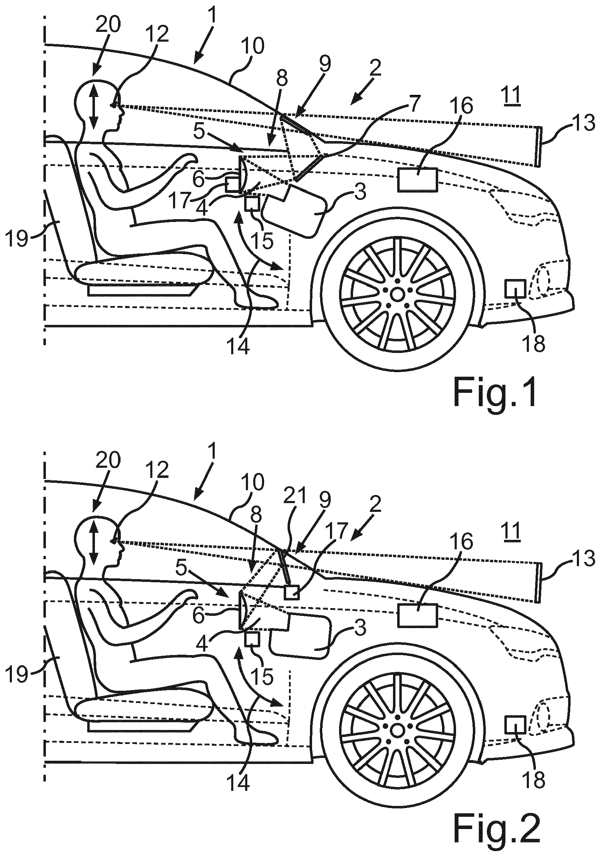

Fig. 1 zeigt eine ausschnittsweise Darstellung eines Kraftfahrzeugs 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst eine Anzeigevorrichtung 2. Die Anzeigevorrichtung 2 ist in dem vorliegenden Ausführungsbeispiel als Kopf-oben-Anzeigevorrichtung beziehungsweise als Head-up Display ausgebildet.

Die Anzeigevorrichtung 2 umfasst eine Bilderzeugungseinrichtung 3. Mittels der Bilderzeugungseinrichtung 3 kann Licht 4 abgestrahlt werden. Insbesondere kann mit der Bilderzeugungseinrichtung 3 ein Bild bereitgestellt werden. Die Bilderzeugungseinrichtung 3 kann beispielsweise einen entsprechenden Bildschirm aufweisen, mit dem das Bild bereitgestellt werden kann beziehungsweise mit dem das Licht 4 abgestrahlt werden kann. Darüber hinaus umfasst die Anzeigevorrichtung 2 eine Optikeinrichtung 5. Die Optikeinrichtung 5 umfasst in dem vorliegenden Ausführungsbeispiel einen ersten Spiegel 6 und einen zweiten Spiegel 7. Das von der Bilderzeugungseinrichtung 3 abgestrahlte Licht 4 trifft zunächst auf den ersten Spiegel 6 und anschließend auf den zweiten Spiegel 7. Die Bilderzeugungseinrichtung 3 und die Optikeinrichtung 5 sind vorliegend innerhalb eines Armaturenbretts 8 des Kraftfahrzeugs 1 angeordnet.

Das Licht 4, das von der Bilderzeugungseinrichtung 3 abgestrahlt wird, wird mittels der Optikeinrichtung 5 auf ein Anzeigeelement 9 projiziert. Das Anzeigeelement 9 ist vorliegend durch einen Teil der Windschutzscheibe 10 des Kraftfahrzeugs 1 gebildet. Das Anzeigeelement 9 umfasst eine semitransparente Spiegelfläche. Das Licht 4, das auf das Anzeigeelement 9 projiziert wird, wird zu den Augen 12 eines Fahrers des Kraftfahrzeugs 1 reflektiert. Somit überlagert sich diese Anzeige mit dem Licht, das von einem Umgebungsbereich 11 des Kraftfahrzeugs 1 zu den Augen 12 des Fahrers gelangt, mit dem Licht 4, das auf das Anzeigeelement 9 projiziert wird. Für den Fahrer des Kraftfahrzeugs 1 ergibt sich somit eine virtuelle Anzeige 13 beziehungsweise ein virtuelles Bild.

Bei der Montage der Anzeigevorrichtung 2 in dem Kraftfahrzeug 1 ergibt sich üblicherweise toleranzbedingt ein entsprechender Neigungsfehler, der vorliegend durch den Pfeil 14 verdeutlicht ist. Um eine aktuelle Lage und/oder eine aktuelle Neigung der Anzeigevorrichtung 2 beziehungsweise einer Komponente der Anzeigevorrichtung 2 zu erfassen, umfasst die Anzeigevorrichtung 2 ferner einen vorliegend nur schematisch dargestellten Lagesensor 15. Mit dem Lagesensor 15 kann die aktuelle Lage und/oder die aktuelle Neigung der Anzeigevorrichtung 2 beziehungsweise einer Komponente der Anzeigevorrichtung 2 bestimmt werden. Der Lagesensor 15 kann beispielsweise einen Neigungssensor und/oder ein Gyroskop umfassen.

Darüber hinaus umfasst die Anzeigevorrichtung 2 eine Steuereinrichtung 16, die mit dem Lagesensor 15 zur Datenübertragung verbunden ist. Entsprechende Datenleitungen sind vorliegend der Übersichtlichkeit halber nicht dargestellt. Die Steuereinrichtung 16 kann die mit dem Lagesensor 15 empfangenen Messdaten entsprechend auswerten und somit die Lage und/oder die Neigung der Anzeigevorrichtung 2 bestimmen. Ferner kann die Steuereinrichtung 16 die aktuelle Lage und/oder Neigung der Anzeigevorrichtung 2 oder einer Komponente der Anzeigevorrichtung 2 mit einer Referenzlage und/oder einer Referenzneigung vergleichen. Die Referenzlage und/oder die Referenzneigung kann beispielsweise mit Hilfe einer Kamera bestimmt werden, die relativ zu einem Fahrersitz 19 positioniert wird.

Mit Hilfe der Kamera kann insbesondere eine Position einer sogenannten Eyebox 20 bestimmt werden. Die Eyebox 20 beschreibt den Bereich in dem Innenraum des Kraftfahrzeugs 1, in welchem die Augen 12 des Fahrers angeordnet sein müssen, um die virtuelle Anzeige 13 sehen zu können. Ferner kann die Referenzlage und/oder die Referenzneigung anhand der Daten eines Fahrzeugneigungssensors 18 bestimmt werden. Mit dem Fahrzeugneigungssensor 18 kann die aktuelle Neigung des Kraftfahrzeugs 1 bestimmt werden. Hierzu kann der Fahrzeugneigungssensor 18 über eine hier nicht dargestellte Datenleitung mit der Steuereinrichtung 16 zur Datenübertragung verbunden sein. Die Steuereinrichtung 16 kann dabei die Abweichung zwischen der Referenzlage und/oder der Referenzneigung zur aktuellen Lage und/oder Neigung der Anzeigevorrichtung 2 bestimmen.

Falls mittels der Steuereinrichtung 16 eine Abweichung der Lage und/oder der Neigung der Anzeigevorrichtung 2 zu der Referenzlage und/oder Referenzneigung festgestellt wird, kann eine Verstelleinrichtung 17 mittels der Steuereinrichtung 16 angesteuert werden. In dem vorliegenden Ausführungsbeispiel kann mittels der Verstelleinrichtung 17 der erste Spiegel 6 der Optikeinrichtung 5 verstellt werden. Insbesondere kann mittels der Verstelleinrichtung 17 eine Neigung des ersten Spiegels 6 verstellt werden.

Fig. 2 zeigt das Kraftfahrzeug 1 gemäß Fig. 1, wobei in dem Kraftfahrzeug 1 eine Anzeigevorrichtung 2 gemäß einer zweiten Ausführungsform angeordnet ist. In diesem Ausführungsbeispiel umfasst die Anzeigevorrichtung 2 als Anzeigeelement 9 einen Combinerspiegel 21. Ferner umfasst die Optikeinrichtung 5 nur einen ersten Spiegel 6. Hierbei wird Licht 4 auf den Combinerspiegel 21 projiziert. Der Combinerspiegel 21, der auch als Combiner bezeichnet werden kann, umfasst eine semitransparente Siegelfläche. So kann analog zu dem Ausführungsbeispiel gemäß Fig. 1 ein virtuelles Bild 13 erzeugt werden. Vorliegend ist die Verstelleinrichtung 17 dazu ausgelegt, eine Neigung des Combinerspiegels 21 in Abhängigkeit von der Referenzlage und/oder der Referenzneigung einzustellen.

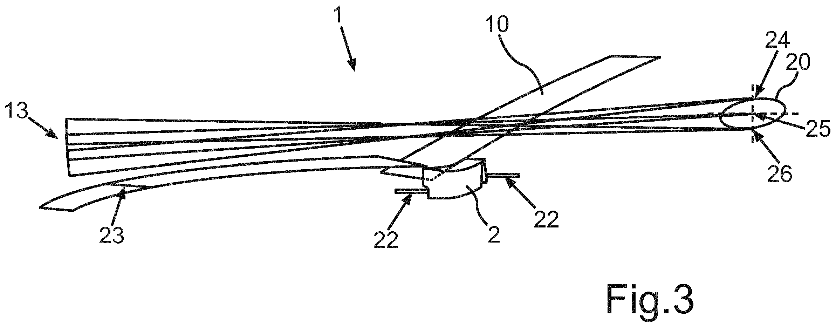

Fig. 3 zeigt eine schematische Darstellung, anhand der die Verstellung der Anzeigevorrichtung 2 verdeutlich werden soll. Vorliegend ist die Anzeigevorrichtung 2 vereinfacht dargestellt. Die Anzeigevorrichtung 2 wird mit zwei Befestigungslaschen 22 an beziehungsweise in dem Kraftfahrzeug 1 gehalten. Vorliegend ist von dem Kraftfahrzeug 1 nur die Windschutzscheibe 10 und eine Motorhaube 23 gezeigt. Ferner ist die Eyebox 20 dargestellt, wobei zudem eine obere Eyebox-Position 24, eine mittlere Eyebox-Position 25 und eine untere Eyebox-Position 26 dargestellt sind. Ferner sind die entsprechenden Lichtstrahlen dargestellt, anhand welcher von der jeweiligen Eyebox-Position 24, 25, 26 das virtuelle Bild beziehungsweise die virtuelle Anzeige 13 bereitgestellt wird. Mit Hilfe der Verstelleinrichtung 17 kann die Lage und/oder Neigung der Anzeigevorrichtung 2 angepasst werden. Dies kann beispielsweise nach der Erstmontage der Anzeigevorrichtung 2 in dem Kraftfahrzeug 1 erfolgen. Es kann auch vorgesehen sein, dass anhand der Sensordaten des Lagesensors 5 die Lage und/oder Neigung der Anzeigevorrichtung 2 zyklisch überprüft wird und gegebenenfalls die Lage und/oder Neigung der Anzeigevorrichtung 2 mittels der Verstelleinrichtung 17 angepasst wird.

## Patentansprüche

1. Anzeigevorrichtung (2) für ein Kraftfahrzeug (1), welche als Kopf-oben-Anzeigevorrichtung ausgebildet ist und welche als Komponenten
- eine Bilderzeugungseinrichtung (3) und eine Optikeinrichtung (5), wobei die Bilderzeugungseinrichtung (3) zum Abstrahlen von Licht (4) ausgelegt ist und die Optikeinrichtung (5) dazu ausgelegt ist, zum Bereitstellen einer virtuellen Anzeige (13) das von der Bilderzeugungseinrichtung (3) abgestrahlte Licht (4) auf ein Anzeigeelement (9), welches eine semitransparente Spiegelfläche aufweist, zu projizieren,
- eine Steuereinrichtung (16), welche dazu ausgelegt ist, eine Abweichung der bestimmten Lage und/oder Neigung der zumindest einen der Komponenten der Anzeigevorrichtung (2) zu einer vorbestimmten Referenzlage und/oder Referenzneigung zu bestimmen, sowie
- eine Verstelleinrichtung (17) zum Verstellen der Lage und/oder der Neigung der zumindest einen der Komponenten der Anzeigevorrichtung (2) in Abhängigkeit von der mit der Steuereinrichtung (16) bestimmten Abweichung umfasst, wobei die Anzeigevorrichtung (2) einen Lagesensor (15) zum Bestimmen einer relativen Lage und/oder Neigung zumindest einer der Komponenten der Anzeigevorrichtung (2) zu einem Referenzelement des Kraftfahrzeugs (1) aufweist,
**dadurch gekennzeichnet, dass**
der Lagesensor (15) als Gyroskop ausgebildet ist.

2. Anzeigevorrichtung (2) nach Anspruch 1,
**dadurch gekennzeichnet, dass**
die Optikeinrichtung (5) dazu ausgelegt ist, das von der Bilderzeugungseinrichtung (3) abgestrahlte Licht (4) zum Bereitstellen der virtuellen Anzeige (13) auf zumindest einen Teil einer Windschutzscheibe (10) des Kraftfahrzeugs (1) als das Anzeigeelement (9) zu projizieren.

3. Anzeigevorrichtung (2) nach einem der Ansprüche 1 oder 2,
**dadurch gekennzeichnet, dass**
die Anzeigevorrichtung (2) als Komponente das Anzeigeelement (9) umfasst, welches als Combinerspiegel (21) ausgebildet ist und die Optikeinrichtung (5) dazu ausgelegt ist, das von der Bilderzeugungseinrichtung (3) abgestrahlte Licht (4) zum Bereitstellen der virtuellen Anzeige (13) auf den Combinerspiegel (21) zu projizieren.

4. Kraftfahrzeug (1) mit einer Anzeigevorrichtung (2) nach einem der vorhergehenden Ansprüche.

5. Kraftfahrzeug (1) nach Anspruch 4,
**dadurch gekennzeichnet, dass**
das Kraftfahrzeug (1) einen Fahrzeugneigungssensor (18) zum Bestimmen einer Neigung des Kraftfahrzeugs (1) umfasst und dass die Steuereinrichtung (16) der Anzeigevorrichtung (2) dazu ausgelegt ist, anhand der bestimmten Neigung des Kraftfahrzeugs (1) eine Referenzneigung vorzubestimmen.

6. Verfahren zum Justieren einer Anzeigevorrichtung (2) eines Kraftfahrzeugs (1), bei welchem die Anzeigevorrichtung (2) in und/oder an dem Kraftfahrzeug (1) angeordnet wird, wobei die Anzeigevorrichtung (2) als Kopf-oben-Anzeigevorrichtung ausgebildet ist und als Komponenten eine Bilderzeugungseinrichtung (3) und eine Optikeinrichtung (5) umfasst, wobei mittels der Bilderzeugungseinrichtung (3) Licht (4) abgestrahlt wird und mittels der Optikeinrichtung (5) zum Bereitstellen einer virtuellen Anzeige (13) das von der Bilderzeugungseinrichtung (3) abgestrahlte Licht (4) auf ein Anzeigeelement (9), welches eine semitransparente Spiegelfläche aufweist, projiziert wird,
und bei welchem eine Referenzlage und/oder eine Referenzneigung bestimmt wird und eine Abweichung der Lage und/oder Neigung der zumindest einen der Komponenten der Anzeigevorrichtung (2) zu der Referenzlage und/oder der Referenzneigung mittels einer Steuereinrichtung (16) bestimmt wird,
und bei welchem die Lage und/oder die Neigung der zumindest einen der Komponenten der Anzeigevorrichtung (2) in Abhängigkeit von der bestimmten Abweichung mittels einer Verstelleinrichtung (17) verstellt wird,
wobei eine relative Lage und/oder Neigung zumindest einer der Komponenten der Anzeigevorrichtung (2) zu einem Referenzelement des Kraftfahrzeugs (1) mittels eines Lagesensors (15) der Anzeigevorrichtung (2) bestimmt wird,
**dadurch gekennzeichnet, dass**
der Lagesensor (15) in Form eines Gyroskops bereitgestellt wird.

7. Verfahren nach Anspruch 6,
**dadurch gekennzeichnet, dass**
die Abweichung zu vorbestimmten Zeitpunkten bestimmt wird.

8. Verfahren nach Anspruch 6 oder 7,
**dadurch gekennzeichnet, dass**
das Kraftfahrzeug (1) zum Bestimmen der Referenzneigung auf einer Referenzfläche positioniert wird.

9. Verfahren nach einem der Ansprüche 6 bis 8
**dadurch gekennzeichnet, dass**
eine Neigung des Kraftfahrzeugs (1) mittels eines Fahrzeugneigungssensors (18) bestimmt wird und die Referenzneigung anhand der Neigung des Kraftfahrzeugs (1) bestimmt wird.

10. Verfahren nach einem der Ansprüche 6 bis 9,
**dadurch gekennzeichnet, dass**
mittels einer Kamera eine Position der mittels der Anzeigevorrichtung (2) bereitgestellten virtuellen Anzeige (13) bestimmt wird und die Referenzlage und/oder die Referenzneigung anhand der Lage der virtuellen Anzeige (13) bestimmt wird.

11. Verfahren nach Anspruch 10,
**dadurch gekennzeichnet, dass**
ein Objekt in einem Umgebungsbereich (11) des Kraftfahrzeugs (1) erfasst wird, eine relative Lage der virtuellen Anzeige zu dem erfassten Objekt bestimmt wird und die Referenzlage und/oder die Referenzneigung anhand der relativen Lage bestimmt wird.

## Claims

1. Display apparatus (2) for a motor vehicle (1), which is in the form of a head-up display apparatus and comprises, as components,
- an image generating device (3) and an optics device (5), wherein the image generating device (3) is designed to emit light (4) and the optics device (5) is designed to project the light (4) emitted by the image generating device (3) onto a display element (9), which has a semi-transparent mirror surface, in order to provide a virtual display (13),
- a control device (16), which is designed to determine a deviation of the determined position and/or inclination of the at least one of the components of the display apparatus (2) from a predetermined reference position and/or reference inclination, and also
- an adjustment device (17) for adjusting the position and/or the inclination of the at least one of the components of the display apparatus (2) in dependence on the deviation determined using the control device (16), wherein the display apparatus (2) has a position sensor (15) for determining a relative position and/or inclination of at least one of the components of the display apparatus (2) with respect to a reference element of the motor vehicle (1),
**characterized in that**
the position sensor (15) is in the form of a gyroscope.

2. Display apparatus (2) according to Claim 1,
**characterized in that**
the optics device (5) is designed to project the light (4) emitted by the image generating device (3) onto at least a part of a windscreen (10) of the motor vehicle (1) as the display element (9) in order to provide the virtual display (13).

3. Display apparatus (2) according to either of Claims 1 and 2,
**characterized in that**
the display apparatus (2) comprises, as component, the display element (9), which is embodied in the form of a combiner mirror (21), and the optics device (5) is designed to project the light (4) emitted by the image generating device (3) onto the combiner mirror (21) in order to provide the virtual display (13).

4. Motor vehicle (1) having a display apparatus (2) according to any of the preceding claims.

5. Motor vehicle (1) according to Claim 4,
**characterized in that**
the motor vehicle (1) comprises a vehicle inclination sensor (18) for determining an inclination of the motor vehicle (1) and **in that** the control device (16) of the display apparatus (2) is designed to predetermine a reference inclination on the basis of the determined inclination of the motor vehicle (1).

6. Method for adjusting a display apparatus (2) of a motor vehicle (1), in which the display apparatus (2) is arranged in and/or at the motor vehicle (1), wherein the display apparatus (2) is in the form of a head-up display apparatus and comprises, as components, an image generating device (3) and an optics device (5), wherein light (4) is emitted by means of the image generating device (3) and the light (4) emitted by the image generating device (3) is projected onto a display element (9), which has a semi-transparent mirror surface, by means of the optics device (5) in order to provide a virtual display (13),
and in which a reference position and/or a reference inclination is determined and a deviation of the position and/or inclination of the at least one of the components of the display apparatus (2) from the reference position and/or the reference inclination is determined by means of a control device (16),
and in which the position and/or the inclination of the at least one of the components of the display apparatus (2) is adjusted in dependence on the determined deviation by means of an adjustment device (17),
wherein a relative position and/or inclination of at least one of the components of the display apparatus (2) with respect to a reference element of the motor vehicle (1) is determined by means of a position sensor (15) of the display apparatus (2),
**characterized in that**
the position sensor (15) is provided in the form of a gyroscope.

7. Method according to Claim 6,
**characterized in that**
the deviation is determined at predetermined points in time.

8. Method according to Claim 6 or 7,
**characterized in that**
the motor vehicle (1) is positioned on a reference surface in order to determine the reference inclination.

9. Method according to any of Claims 6 to 8,
**characterized in that**
an inclination of the motor vehicle (1) is determined by means of a vehicle inclination sensor (18) and the reference inclination is determined on the basis of the inclination of the motor vehicle (1).

10. Method according to any of Claims 6 to 9,
**characterized in that**
a position of the virtual display (13) provided by means of the display apparatus (2) is determined by means of a camera and the reference position and/or the reference inclination is determined on the basis of the position of the virtual display (13).

11. Method according to Claim 10,
**characterized in that**
an object in a surrounding region (11) of the motor vehicle (1) is captured,
a relative position of the virtual display with respect to the captured object is determined and
the reference position and/or the reference inclination is determined on the basis of the relative position.

## Revendications

1. Dispositif d'affichage (2) destiné à un véhicule automobile (1), ledit dispositif d'affichage étant conçu comme dispositif d'affichage tête haute et comprenant comme composants
- une unité de génération d'images (3) et une unité d'optique (5), le dispositif de génération d'images (3) étant conçu pour émettre de la lumière (4) et l'unité d'optique (5) étant conçu pour projeter la lumière (4), émise par l'unité de génération d'images (3) sur un élément d'affichage (9) qui comporte une surface de miroir semi-transparente, afin de fournir un affichage virtuel (13),
- une unité de commande (16) qui est conçue pour déterminer un écart de la position et/ou de l'inclinaison déterminées d'au moins un des composants du dispositif d'affichage (2) par rapport à une position de référence et/ou une inclinaison de référence prédéterminées, et
- une unité de réglage (17) destinée à régler la position et/ou l'inclinaison d'au moins un des composants du dispositif d'affichage (2) en fonction de l'écart déterminé avec l'unité de commande (16),
le dispositif d'affichage (2) comportant un capteur de position (15) destiné à déterminer une position relative et/ou une inclinaison relative d'au moins un des composants du dispositif d'affichage (2) par rapport à un élément de référence du véhicule automobile (1), **caractérisé en ce que** le capteur de position (15) est conçu comme un gyroscope.

2. Dispositif d'affichage (2) selon la revendication 1,
**caractérisé en ce que**
l'unité d'optique (5) étant conçu pour projeter la lumière (4), émise par l'unité de génération d'images (3), sur au moins une partie d'un pare-brise (10) du véhicule automobile (1) comme élément d'affichage (9) afin de fournir l'affichage virtuel (13).

3. Dispositif d'affichage (2) selon l'une des revendications 1 ou 2,
**caractérisé en ce que**
le dispositif d'affichage (2) comprend comme composant l'élément d'affichage (9) qui est conçu comme un miroir combinateur (21) et l'unité d'optique (5) est conçue pour projeter la lumière (4), émise par l'unité de génération d'images (3), sur le miroir combinateur (21) afin de fournir l'affichage virtuel (13).

4. Véhicule automobile (1) comprenant un dispositif d'affichage (2) selon l'une des revendications précédentes.

5. Véhicule automobile (1) selon la revendication 4,
**caractérisé en ce que**
le véhicule automobile (1) comprend un capteur d'inclinaison de véhicule (18) destiné à déterminer une inclinaison du véhicule automobile (1) et **en ce que** l'unité de commande (16) du dispositif d'affichage (2) est conçue pour prédéterminer une inclinaison de référence sur la base de l'inclinaison déterminée du véhicule automobile (1).

6. Procédé de réglage d'un dispositif d'affichage (2) d'un véhicule automobile (1), procédé dans lequel le dispositif d'affichage (2) est disposé dans et/ou sur le véhicule automobile (1), le dispositif d'affichage (2) étant conçu comme un dispositif d'affichage tête haute et comprenant comme composants une unité de génération d'images (3) et une unité d'optique (5), de la lumière (4) étant émise au moyen de l'unité de génération d'images (3) et la lumière (4), émise par l'unité de génération d'images (3), étant projetée sur un élément d'affichage (9), qui comporte une surface de miroir semi-transparente, au moyen de l'unité d'optique (5) afin de fournir un affichage virtuel (13), et dans lequel une position de référence et/ou une inclinaison de référence est déterminée et un écart de la position et/ou de l'inclinaison de l'au moins un des composants du dispositif d'affichage (2) par rapport à la position de référence et/ou l'inclinaison de référence étant déterminé au moyen d'une unité de commande (16), et dans lequel la position et/ou l'inclinaison de l'au moins un des composants du dispositif d'affichage (2) est réglé au moyen d'une unité de réglage (17) en fonction de l'écart déterminé,
une position relative et/ou une inclinaison relative de l'au moins un des composants du dispositif d'affichage (2) par rapport à un élément de référence du véhicule automobile (1) étant déterminées au moyen d'un capteur de position (15) du dispositif d'affichage (2), **caractérisé en ce que**
le capteur de position (15) est réalisé sous la forme d'un gyroscope.

7. Procédé selon la revendication 6,
**caractérisé en ce que**
l'écart est déterminé à des instants prédéterminés.

8. Procédé selon la revendication 6 ou 7,
**caractérisé en ce que**
le véhicule automobile (1) est positionné sur une surface de référence afin de déterminer l'inclinaison de référence.

9. Procédé selon l'une des revendications 6 à 8,
**caractérisé en ce que**
une inclinaison du véhicule automobile (1) est déterminée au moyen d'un capteur d'inclinaison de véhicule (18) et l'inclinaison de référence est déterminée sur la base de l'inclinaison du véhicule automobile (1).

10. Procédé selon l'une des revendications 6 à 9,
**caractérisé en ce que**
une position de l'affichage virtuel (13) fournie par le dispositif d'affichage (2) est déterminée au moyen d'une caméra et la position de référence et/ou l'inclinaison de référence est déterminée sur la base de la position de l'affichage virtuel (13).

11. Procédé selon la revendication 10,
**caractérisé en ce que**
un objet est détecté dans une zone d'environnement (11) du véhicule automobile (1), une position relative de l'affichage virtuel par rapport à l'objet détecté est déterminée et la position de référence et/ou l'inclinaison de référence est déterminée sur la base de la position relative.
